# FASCICULE DE BREVET EUROPEEN

(11) **EP 1 874 613 B1**
(45) Date de publication et mention de la délivrance du brevet: **30.03.2016**
(21) Numéro de dépôt: 06743752.5
(22) Date de dépôt: 27.04.2006
(51) Int. Cl.: B62D 21/15, B62D 25/08

(54) **PLANCHER ARRIERE DE VEHICULE AUTOMOBILE**
FONDBODEN EINES AUTOMOBILS
REAR FLOOR OF A MOTOR VEHICLE

(30) Priorité: 27.04.2005 FR 0504258
(43) Date de publication de la demande: 09.01.2008
(73) Titulaire: Compagnie Plastic Omnium, 69007 Lyon (FR)
(72) Inventeur: ROCHEBLAVE, Laurent, F-69100 Villeurbanne (FR); ANDRE, Gérald, F-01500 Ambérieu en Bugey (FR)
(74) Mandataire: Thiollier, Clémence-Olivia Laure Marie
(86) Numéro de dépôt international: PCT/FR2006/000943
(87) Numéro de publication internationale: WO 2006/114525

(56) Documents cités:
- WO-A-2004/104442
- WO-A1-2004/098820
- WO-A2-03/033332
- US-A1- 2003 173 799
- US-A1- 2005 077 756
- PATENT ABSTRACTS OF JAPAN vol. 015, no. 307 (M-1143), 6 août 1991 (1991-08-06) & JP 03 112788 A (MAZDA MOTOR CORP), 14 mai 1991 (1991-05-14)

## Description

La présente invention concerne un bloc arrière, un plancher arrière et un renfort de véhicule automobile.

Plus précisément, elle se situe dans le domaine de la protection de l'arrière des véhicules contre les chocs à haute vitesse.

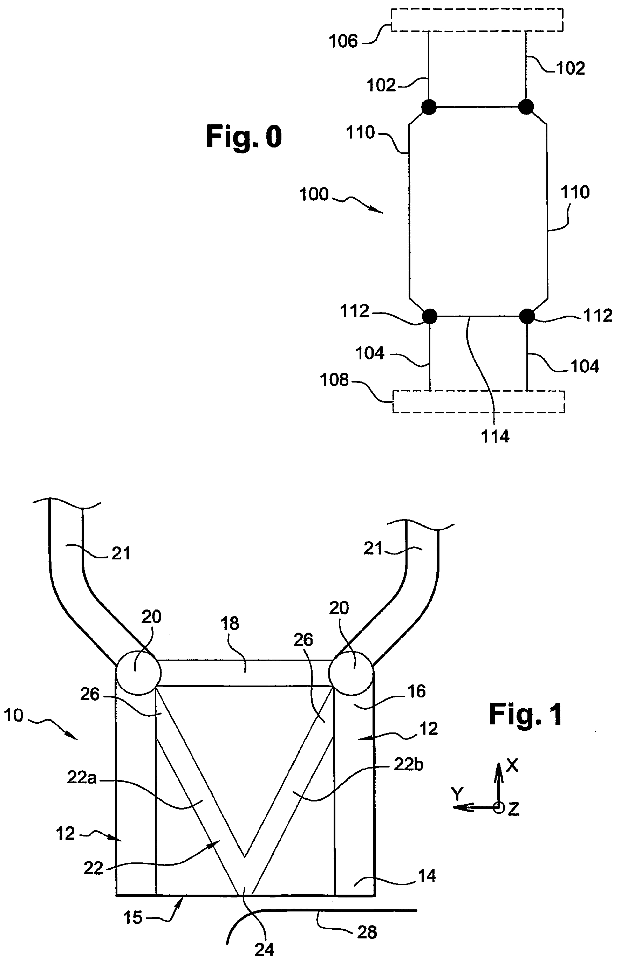

Dans la présente demande, on définit le châssis 100 du véhicule comme une structure rigide, visible sur la figure 0 représentant schématiquement la caisse d'un véhicule de l'état de la technique, comportant une cellule de survie, indéformable, de façon à protéger les passagers lors d'un choc. Ce châssis présente deux longerons avant 102 et deux longerons arrière 104, servant d'appui à des poutres de chocs avant 106 et arrière 108. On appelle "bas de caisse 110" les parties latérales du châssis dans la cellule de survie, et "noeuds structuraux 112" les deux intersections des bas de caisse 110 avec les longerons arrière 104.

Lors d'un choc arrière, une partie de l'énergie du choc est absorbée par la déformation du bloc arrière, notamment de la poutre 108 et des longerons 104. Le reste de l'énergie est transmise, sous forme d'énergie cinétique, au châssis 100, qui ne se déforme pas et préserve donc les passagers. Les noeuds 112 sont destinés à reprendre les efforts reçus par l'arrière des longerons pour les transmettre au châssis. Les noeuds 112 peuvent en outre se situer à l'intersection d'une traverse 114 avec les longerons, et être l'interface avec le train arrière, destiné à transmettre les efforts verticaux ou transversaux issus du contact avec la route. Les noeuds 112 sont par conséquent des raccordements très rigides, d'autant plus que la liaison entre ces pièces est généralement assurée par soudure, ce qui contribue fortement à la rigidité. Par définition, les noeuds n'ont pas un rôle d'absorption d'énergie, ils sont considérés comme indéformables pour un choc allant jusqu'à 80 Km/h.

Une telle structure n'est pas pleinement satisfaisante dans le cas des chocs à haute vitesse recouvrant partiellement l'arrière du véhicule, pour deux raisons. D'une part, lorsque le point d'impact est situé sur un côté de l'arrière du véhicule, un seul des deux longerons est sollicité pour résister à l'impact, alors que le choc est particulièrement violent et qu'il est nécessaire de fournir une résistance maximale. D'autre part, lorsque le point d'impact est situé entre les deux longerons, la poutre de chocs 108 est fortement sollicitée en flexion et peut se rompre.

On connaît déjà, dans l'état de la technique, un moyen de répondre à ces inconvénients, en agençant un troisième longeron entre les deux autres. Ce troisième longeron s'étend entre la poutre de chocs 108 et la traverse opposée 114. Il permet ainsi de mieux absorber l'énergie à la suite du choc en formant un troisième point d'appui de la poutre.

Cependant, lorsque le choc recouvre uniquement une partie de l'arrière du véhicule, l'effort est transmis, au châssis, et plus précisément aux bas de caisse 110, par l'intermédiaire de la traverse, de sorte que l'effort total admissible par le bloc arrière est limité par la résistance à la flexion de cette traverse 114. En outre, ce troisième longeron présente un risque d'intrusion dans la cellule de survie ou dans le réservoir à carburant.

Un plancher arrière de vehicule automobile tel que décrit dans le préambule de la revendication 1 est connu du document US 2005/0077756A1

. La présente invention vise à résoudre ces inconvénients en proposant un bloc arrière offrant une grande résistance aux chocs, même lors d'un choc recouvrant partiellement l'arrière.

A cet effet, l'invention concerne un plancher arrière de véhicule automobile tel que décrit dans la revendication 1.

Par "branches s'étendant depuis une extrémité arrière dudit renfort jusqu'à l'un des noeuds", on entend des extrémités du renfort, liées directement ou indirectement à la poutre et aux noeuds, aptes à recevoir et transmettre des efforts reçus par la poutre au châssis, plus précisément aux bas de caisse du véhicule.

Ainsi le renfort est configuré de manière à s'appuyer sur les noeuds pour absorber l'énergie d'un choc à haute vitesse et à transmettre aux noeuds des efforts subis par la poutre ; notamment lors d'un choc à basse vitesse.

Grâce à l'invention, tout effort reçu par l'extrémité arrière du renfort est directement transmis en diagonale, autrement dit en ligne droite, à chacun des deux noeuds, et donc aux bas de caisse, si bien que chacun des deux bas de caisse participera à la reprise de l'effort lié à un choc recouvrant partiellement l'arrière du véhicule, sans que cette participation ne dépende de la résistance à la flexion d'une traverse reliant les deux noeuds. On fait donc mieux participer le bas de caisse situés du côté opposé au choc, afin d'augmenter l'effort transmis au châssis, et ainsi mieux absorber l'énergie par déformation du bloc arrière, donc diminuer la pénétration de l'obstacle dans le bloc, ce qui est particulièrement intéressant pour les chocs à haute vitesse, au-delà de 50 Km/h. On protège donc davantage les occupants du véhicule et le système carburant reste intègre.

En conséquence, avec un tel bloc arrière, il est possible, tout en conservant la même pénétration dans le bloc, d'augmenter de 30% l'effort maximal transmis aux bas de caisse, et donc d'absorber des chocs plus violents, sans pour autant augmenter la masse du véhicule en rigidifiant les bas de caisse.

Outre la meilleure absorption des chocs à haute vitesse, le bloc arrière fournit une meilleure protection des chocs à faible vitesse, de moins de 16 Km/h. En effet, grâce au renfort, la poutre dispose d'au moins un point d'appui situé entre les deux longerons et travaille donc en compression davantage qu'en flexion, si bien qu'elle absorbe plus efficacement les chocs.

De plus, la poutre a moins de risques de se rompre lors d'un choc "poteau arrière", ce qui permet d'allonger la poutre, et notamment d'utiliser une poutre en matière thermoplastique.

De préférence, le renfort est monobloc et les deux branches forment un V. Ainsi, le renfort comporte une seule extrémité arrière, sensiblement centrale par rapport aux deux longerons, formant un troisième point d'appui de la poutre. Cependant, on peut envisager que les deux branches soient séparées, le renfort comprenant ainsi deux extrémités arrière, agencées de part et d'autre du centre de la poutre de chocs.

Selon un mode de réalisation préféré de l'invention, le bloc arrière comporte une traverse reliant les deux noeuds. Grâce à la forme en deux diagonales du renfort selon l'invention, la traverse ne travaille plus qu'en traction lors du choc : elle maintient constant l'écartement entre les deux longerons.

De préférence, pour plus d'efficacité, le renfort est agencé dans le même plan horizontal que les longerons.

Selon un mode de réalisation, le bloc arrière comporte une roue de secours et le renfort est agencé au-dessus de cette roue de secours. Il est également possible que l'extrémité arrière du renfort comporte des moyens détachables de fixation au véhicule et que les extrémités avant comportent des moyens de pivotement du renfort autour d'un axe transversal du véhicule. Ainsi, le mouvement de pivotement permet de déplacer le renfort et d'extraire la roue de secours.

Eventuellement, le renfort est réalisé dans un matériau composite ou hybride métal/plastique.

Selon un mode particulier de réalisation de l'invention, le bloc arrière comporte un absorbeur de chocs basse vitesse agencé entre la poutre de chocs et l'extrémité arrière du renfort.

Selon un mode de réalisation de l'invention, le renfort comporte des moyens de fixation de ceintures de sécurité, notamment de ceinture de sièges constituant le troisième rang du véhicule. Le renfort peut également comporter des moyens de rétention horizontale et/ou de soutien vertical d'une roue de secours.

L'invention a également pour objet un plancher arrière de véhicule automobile, comportant le renfort du bloc arrière décrit ci-dessus, c'est-à-dire comportant des moyens de fixation du renfort, un logement de réception du renfort ou encore étant réalisé d'un seul tenant avec ce dernier. L'intégration du renfort dans le plancher a pour avantage qu'un couplage mécanique entre les deux engendre un bloc arrière plus stable. On peut ainsi soit atteindre un effort total admissible encore plus élevé, soit réduire la masse du bloc arrière, pour une même résistance aux chocs. En outre, le renfort peut être venu de matière avec le plancher.

Selon un mode particulier de réalisation, le plancher intègre une jupe arrière du véhicule. Ainsi, la poutre de chocs, agencée derrière la jupe et le plancher, s'appuie de manière continue sur le plancher, et non en quelques points discrets, de façon à répartir l'effort dans le plancher de façon homogène, pour le transmettre aux noeuds.

Eventuellement, le plancher est adapté pour recevoir un renfort de section ou de raideur variable. Ainsi, il est possible d'intégrer, dans un plancher de dimension standard, un renfort adapté à des exigences spécifiques à certains chocs. Comme ces exigences peuvent être différentes d'un pays à l'autre ou d'un modèle de véhicule à un autre, on peut fournir un plancher de dimension standard, donc plus économique, tout en procurant une résistance aux chocs adaptée au modèle du véhicule.

L'invention a également pour objet un procédé de fabrication d'un tel plancher, comprenant une étape d'intégration du renfort, par exemple par combinaison des matériaux composant le plancher et le renfort.

L'invention a enfin pour objet un renfort pour un bloc arrière tel que décrit ci-dessus.

L'invention sera mieux comprise à la lecture de la description qui va suivre, donnée uniquement à titre d'exemple et faite en se référant aux dessins dans lesquels :
- la figure 1 est un schéma représentant la structure d'un bloc arrière selon l'invention ;
- la figure 2 est une vue en perspective éclatée d'un plancher selon l'invention et de la structure accueillant ce plancher ; et
- la figure 3 est une coupe en perspective selon l'axe longitudinal du véhicule d'une partie d'un autre bloc arrière selon l'invention.

Dans cette demande, le qualificatif "avant" d'une pièce désigne la partie de la pièce dirigée vers la direction (X) de déplacement en marche avant du véhicule, par opposition avec le qualificatif "arrière" de la pièce, désignant la partie dirigée dans la direction opposée.

Un bloc arrière 10 selon l'invention comporte deux longerons longitudinaux 12, comportant chacun une extrémité arrière 14 et une extrémité avant 16. Les extrémités arrière 14 servent d'appui à une poutre de chocs 15.

L'extrémité avant 16 du longeron, plus précisément le raccordement entre l'extrémité 16 et un bas de caisse 21 du véhicule, forme un noeud structural arrière 20 du véhicule. Lors d'un choc arrière, le noeud structural 20 constitue un moyen de transmission des efforts subis par les longerons arrière 12 vers les bas de caisse 21. Les deux noeuds structuraux 20 sont reliés par une traverse avant 18. Ils peuvent en outre reprendre les efforts verticaux ou transversaux du train arrière du véhicule.

Ainsi, les noeuds 20 constituent des parties très rigides du véhicule, rigidité accrue par la soudure entre les différentes pièces. Cette rigidité permet de transmettre les efforts subis lors d'un choc aux bas de caisse 21.

Le bloc arrière comporte en outre un renfort 22, comportant deux branches 22a et 22b, formant un V dont la pointe est dirigée vers l'arrière. Les deux branches 22a, 22b s'étendent en ligne droite depuis une extrémité arrière 24 du renfort vers deux extrémités avant 26, s'appuyant contre les longerons 12, plus précisément contre les noeuds 20. Le renfort 22 est agencé dans le même plan horizontal que les longerons.

L'extrémité arrière 24, la pointe du V, forme un point d'appui de la poutre 15, de manière à transmettre des efforts reçus par l'extrémité arrière 24 aux noeuds 20.

Lors d'un choc avec un obstacle 28, par exemple un mur recouvrant la partie droite de l'arrière du véhicule, le renfort absorbe l'énergie en se déformant, en prenant appui sur les noeuds 20, et l'extrémité 24 transmet les efforts reçus aux bas de caisse. Ainsi, ce n'est pas la traverse 18 qui est sollicitée en flexion, mais directement les deux longerons, y compris celui situé du côté opposé au choc, le longeron gauche, de façon à augmenter l'effort transmis aux bas de caisse 21. La traverse 18 travaille uniquement en traction pour retenir les noeuds 20.

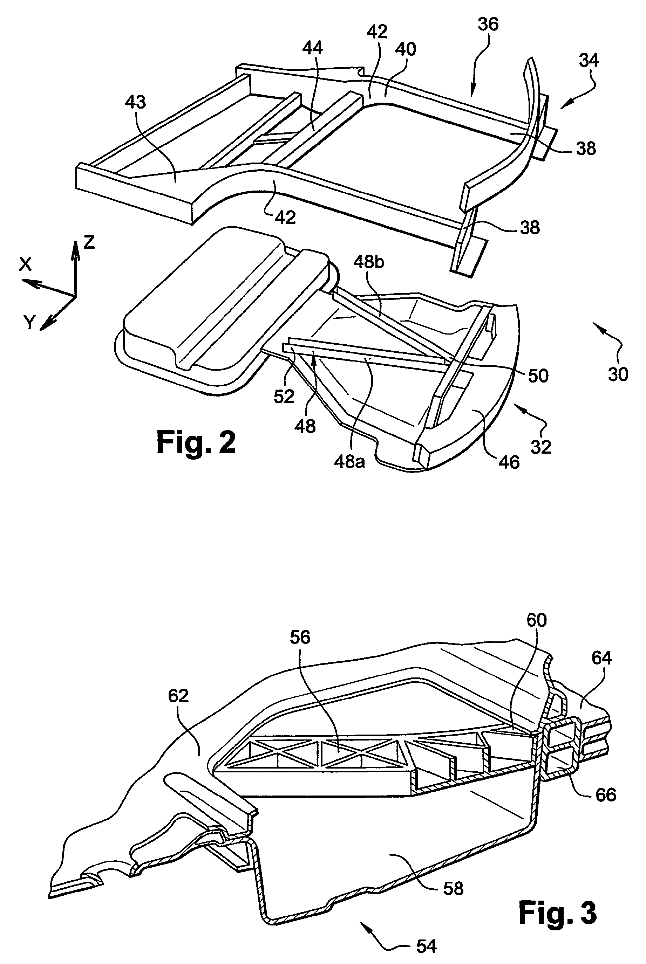

Comme on peut le voir sur la figure 2, un bloc arrière 30 selon l'invention comporte un plancher structurant 32 et une partie arrière 34 de la caisse du véhicule.

La partie 34 comprend deux longerons 36, comportant chacun une extrémité arrière 38, une extrémité avant 40, formant un noeud structural 42, raccordant le longeron à un bas de caisse 43. Les deux noeuds 42 sont reliés entre eux par une traverse 44.

Le plancher 32 est monté sur la caisse du véhicule 34 selon la direction Z, par le bas. Il comprend une poutre de chocs 46 et un renfort 48 comportant deux branches 48a et 48b, une extrémité arrière 50 et deux extrémités avant 52, semblable à celui de la figure 1. Le couplage mécanique entre le plancher structurant 32 et le renfort 48 engendre une structure rigide.

Le renfort 48 peut être réalisé en acier, en matière plastique, dans un matériau composite ou hybride métal/plastique. Il est réalisé de façon classique, par exemple par profilage, emboutissage, ou injection-compression.

Une fois que le plancher 32 est monté sur la caisse 34, l'extrémité arrière 50 du renfort forme un point d'appui de la poutre 46, de façon à transmettre les efforts vers les extrémités 52 du renfort, qui forment elles-mêmes un appui contre les parties avant 42 des longerons. Ainsi, l'énergie est absorbée par la poutre et les efforts sont transmis à la cellule de survie, notamment aux bas de caisse 43, sans passer directement par la traverse 44.

Le renfort 48 peut en outre comporter des moyens de fixation de ceintures de sécurité, ainsi que des moyens de rétention ou de soutien d'une roue de secours.

Sur la figure 2, le renfort 48 fait saillie du plancher, mais on peut envisager de l'intégrer dans l'épaisseur du plancher 32, le renfort étant éventuellement venu de matière avec le reste du plancher.

Selon un autre mode de réalisation non représenté, le plancher 32 intègre une jupe arrière du véhicule, le tout formant un module rapporté sur la caisse.

Un plancher 54 selon l'invention comporte un renfort 56, semblable aux précédents, muni de nervures pour le rigidifier, visible sur la figure 3. Il comporte également un logement 58 pour une roue de secours, le renfort 56 étant agencé au-dessus de la roue de secours lorsqu'elle est présente dans le logement 58, afin que le renfort travaille dans le plan horizontal.

Eventuellement, l'extrémité arrière 60 du renfort comporte des moyens détachables de fixation au reste du véhicule (non représentés), sous forme d'une serrure par exemple, et les extrémités avant 62 comportent des moyens de pivotement du renfort autour d'un axe transversal du véhicule, par exemple des charnières. Ainsi, il est possible de détacher l'extrémité avant 60 du renfort, de faire pivoter le renfort et de rendre accessible le logement 58 pour extraire la roue de secours. On configure cependant les charnières et la serrure pour qu'ils ne laissent pas le renfort être expulsé lors du choc.

En outre, l'extrémité arrière 60 du renfort 56 peut former un point d'appui indirect d'une poutre de chocs 64. En effet, un absorbeur de chocs 66 est agencé entre la poutre 64 et l'extrémité 60.

Selon un autre mode de réalisation, le plancher 54 est adapté pour recevoir un renfort de section ou de raideur variable du renfort 56. Ainsi, le plancher 54 peut être de dimension standard, donc économique, tout en procurant une résistance aux chocs adaptée au modèle du véhicule, grâce à un renfort spécifique.

Grâce au renfort de l'invention, le bloc arrière offre une nouvelle répartition des efforts engendrés lors d'un choc recouvrant partiellement l'arrière du véhicule, notamment lors d'un choc allant au-delà de 50 ou 80 Km/h. Le bloc arrière a ainsi une capacité d'absorption plus grande, qui ne dépend pas de la raideur en flexion de la traverse reliant les noeuds. On procure une meilleure protection des passagers et du système à carburant.

En outre, la poutre de chocs dispose d'au moins trois points d'appui et travaille donc de façon plus homogène, donc plus efficace. Esthétiquement, ceci permet de réduire la distance à prévoir entre la peau de pare-chocs et les longerons, et donc le porte-à-faux arrière.

On peut noter que le renfort selon l'invention participe à l'absorption d'énergie et donc se déforme pour un choc à haute vitesse, alors qu'il constitue un renfort de rigidification indéformable pour les chocs à faible vitesse.

On notera enfin que la présente invention n'est pas limitée aux modes de réalisation précédemment décrits, mais bien à ceux couverts par les revendications.

En particulier le renfort peut comporter des moyens de soutien d'éléments du bloc arrière, tels qu'une ou plusieurs batteries, des bagages, des accessoires.

## Revendications

1. Plancher arrière (32) de véhicule automobile, destiné à faire partie d'un bloc arrière de véhicule automobile, ledit bloc comportant deux longerons longitudinaux (12, 36), comprenant chacun une extrémité avant formant un noeud structural arrière (20, 42) du véhicule et une extrémité arrière (14, 38), ces extrémités arrière étant agencées pour servir d'appui à une poutre de chocs (15, 46), le plancher étant tel qu'il comporte en outre un renfort (22, 48, 56) comprenant au moins une extrémité arrière (24, 50, 60), agencée pour servir d'appui à la poutre de chocs (15, 46), et deux branches (22a, 22b, 48a, 48b) destinées à s'étendre chacune en ligne droite depuis l'extrémité arrière (24, 50, 60) dudit renfort jusqu'à l'un (20, 42) des noeuds, **caractérisé en ce que** le plancher est structurant et un couplage mécanique entre le plancher structurant (32) et le renfort (48) engendre une structure rigide, le plancher étant monté, avec le renfort intégré, sur la caisse du véhicule.

2. Plancher selon la revendication 1, dans lequel les deux branches (22a, 22b, 48a, 48b) forment un V.

3. Plancher selon l'une quelconque des revendications 1 à 2, destiné à faire partie d'un bloc arrière comportant une traverse (18, 44) reliant les deux noeuds.

4. Plancher selon l'une quelconque des revendications 1 à 3, dans lequel le renfort (22, 48, 56) est conformé pour être agencé dans le même plan horizontal que les longerons.

5. Plancher selon l'une quelconque des revendications 1 à 4, destiné à faire partie d'un bloc arrière comportant une roue de secours, et dans lequel le renfort (56) est agencé au-dessus de la roue de secours.

6. Plancher selon l'une quelconque des revendications 1 à 5, dans lequel l'extrémité arrière du renfort comporte des moyens détachables de fixation au véhicule et ses extrémités avant comportent des moyens de pivotement du renfort autour d'un axe transversal du véhicule.

7. Plancher selon l'une quelconque des revendications 1 à 6, dans lequel le renfort est réalisé dans un matériau composite ou hybride métal/plastique.

8. Plancher selon l'une quelconque des revendications 1 à 7, destiné à faire partie d'un bloc arrière comportant un absorbeur (66) de chocs agencé entre la poutre de chocs (64) et l'extrémité arrière (60) du renfort (46).

9. Plancher selon l'une quelconque des revendications 1 à 8, dans lequel le renfort comporte des moyens de fixation de ceintures de sécurité.

10. Plancher selon l'une quelconque des revendications 1 à 9, dans lequel le renfort comporte des moyens de rétention ou de soutien d'une roue de secours.

11. Plancher arrière selon l'une quelconque des revendications 1 à 10, venu de matière avec le renfort.

12. Plancher selon la revendication précédente, dans lequel le renfort est intégré dans l'épaisseur du plancher.

13. Plancher arrière selon l'une quelconque des revendications 1 à 12, intégrant une jupe arrière du véhicule.

14. Plancher arrière selon l'une quelconque des revendications 1 à 13, adapté pour recevoir un renfort de section ou de raideur variable.

15. Procédé de fabrication d'un plancher arrière selon l'une quelconque des revendications 1 à 14, comprenant une étape d'intégration du renfort.

## Patentansprüche

1. Heckraumboden (32) für ein Kraftfahrzeug, der dazu bestimmt ist, Teil einer Heckeinheit eines Kraftfahrzugs zu bilden, wobei die Einheit zwei Längsträger (12, 36) aufweist, die jeweils ein vorderes Ende, das ein hinteres Strukturknotenteil (20, 42) des Fahrzeugs bildet, und ein hinteres Ende (14, 38) umfassen, wobei diese vorderen Enden angeordnet sind, um als Abstützung für einen Aufprallträger (15, 46) zu dienen, wobei der Boden dergestalt ist, dass er ferner eine Versteifung (22, 48, 56) aufweiset, die mindestens ein vorderes Ende (24, 50, 60), das angeordnet ist, um als Abstützung für den Aufprallträger (15, 46) zu dienen, und zwei Schenkel (22a, 22b, 48a, 48b) umfasst, die eingerichtet sind, um sich jeder geradlinig von dem hinteren Ende (24, 50, 60) der Versteifung zu einem (20, 42) der Knoten zu erstrecken, **dadurch gekennzeichnet, dass** der Boden strukturierend ist und eine mechanische Kopplung zwischen dem strukturierenden Boden (32) und der Versteifung (48) eine steife Struktur erzeugt, wobei der Boden mit der integrierten Versteifung an der Karosserie des Fahrzeugs montiert ist.

2. Boden nach Anspruch 1, wobei die zwei Schenkel (22a, 22b, 48a, 48b) ein V bilden.

3. Boden nach einem der Ansprüche 1 bis 2, der dazu bestimmt ist, Teil einer Heckeinheit zu bilden, die einen Querträger (18, 44) aufweist, der die zwei Knoten verbindet.

4. Boden nach einem der Ansprüche 1 bis 3, wobei die Versteifung (22, 48, 56) ausgebildet ist, um in der gleichen horizontalen Ebene wie die Längsträger angeordnet zu werden.

5. Boden nach einem der Ansprüche 1 bis 4, der dazu bestimmt ist, Teil einer Heckeinheit zu bilden, die ein Reserverad aufweist, und wobei die Verseifung (56) oberhalb des Reserverads angeordnet ist.

6. Boden nach einem der Ansprüche 1 bis 5, wobei das hintere Ende der Versteifung lösbare Mittel zum Befestigen am Fahrzeug aufweiset und ihre vorderen Enden Mittel zum Schwenken der Versteifung um eine Querachse des Fahrzeugs aufweisen.

7. Boden nach einem der Ansprüche 1 bis 6, wobei die Versteifung aus seinem Verbundmaterial oder Metall-Kunststoff-Hybridmaterial realisiert ist.

8. Boden nach einem der Ansprüche 1 bis 7, der dazu bestimmt ist, Teil einer Heckeinheit zu bilden, die einen Stoßdämpfer (66) aufweiset, der zwischen dem Aufprallträger (64) und dem hinteren Ende (60) der Versteifung (46) angeordnet ist.

9. Boden nach einem der Ansprüche 1 bis 8, wobei die Versteifung Mittel zum Befestigen von Sicherheitsgurten aufweiset.

10. Boden nach einem der Ansprüche 1 bis 9, wobei die Versteifung Mittel zum Rückhalten oder Stützen eines Reserverads aufweist.

11. Heckraumboden nach einem der Ansprüche 1 bis 10, der einstückig mit der Versteifung ausgebildet ist.

12. Boden nach dem vorhergehenden Anspruch, wobei die Versteifung in die Dicke des Bodens integriert ist.

13. Heckraumboden nach einem der Ansprüche 1 bis 12, der eine Heckschürze des Fahrzeugs integriert.

14. Heckraumboden nach einem der Ansprüche 1 bis 13, der eingerichtet ist, um eine Versteifung mit variablem Querschnitt oder variabler Steifigkeit aufzunehmen.

15. Verfahren zur Herstellung eines Heckraumbodens nach einem der Ansprüche 1 bis 14, umfassend einen Schritt des Integrierens der Versteifung.

## Claims

1. Rear floor (32) of a motor vehicle, configured to be part of a motor vehicle rear block, said block including two longitudinal rails (12, 36), each comprising a front end forming a rear structural node (20, 42) of the vehicle and a rear end (14, 38), these rear ends being arranged to act as support for an impact beam (15, 46), the floor being such that it further comprises a reinforcement (22, 48, 56) comprising at least one rear end (24, 50, 60) arranged to act as support for the impact beam (15, 46) and two branches (22a, 22b, 48a, 48b) configured so that each one extends in a straight line from the rear end (24, 50, 60) of said reinforcement up to one (20, 42) of the nodes, **characterised in that** the floor is structural and a mechanical coupling between the structural floor (32) and the reinforcement (48) creates a rigid structure, the floor being mounted, with the integrated reinforcement, on the vehicle body.

2. Floor according to claim 1, wherein the two branches (22a, 22b, 48a, 48b) form a V-shape.

3. Floor according to claim 1 or 2, configured to be part of a rear block having a cross member (18, 44) interconnecting the two nodes.

4. Floor according to any one of claims 1 to 3, wherein the reinforcement (22, 48, 56) is shaped to be arranged in the same horizontal plane as the longitudinal rails.

5. Floor according to any one of claims 1 to 4, configured to be part of a rear block having a spare wheel, and wherein the reinforcement (56) is arranged over the spare wheel.

6. Floor according to any one of claims 1 to 5, wherein the rear end of the reinforcement includes detachable fastening means for fastening it to the vehicle and its front ends include pivoting means for allowing the reinforcement to pivot about a transverse axis of the vehicle.

7. Floor according to any one of claims 1 to 6, wherein the reinforcement is made of a composite or metal/plastic hybrid material.

8. Floor according to any one of claims 1 to 7, configured to be part of a rear block comprising an impact absorber (66) arranged between the impact beam (64) and the rear end (60) of the reinforcement (46).

9. Floor according to any one of claims 1 to 8, wherein the reinforcement includes means for attaching seat belts.

10. Floor according to any one of claims 1 to 9, wherein the reinforcement includes means for retaining or supporting a spare wheel.

11. Rear floor according to any one of claims 1 to 10, made in one piece with the reinforcement.

12. Floor according to the preceding claim, wherein the reinforcement is incorporated into the thickness of the floor.

13. Rear floor according to any one of claims 1 to 12, including a rear skirt of the vehicle.

14. Rear floor according to any one of claims 1 to 13, adapted to receive a reinforcement having variable cross-section or stiffness.

15. Method for manufacturing a rear floor according to any one of claims 1 to 14, comprising a step for integrating the reinforcement.
